(19) Europäisches Patentamt
European Patent Office
Office européen des brevets

(11) **EP 2 500 595 B1**

(12) **EUROPÄISCHE PATENTSCHRIFT**

(45) Veröffentlichungstag und Bekanntmachung des Hinweises auf die Patenterteilung:
**19.04.2017 Patentblatt 2017/16**

(51) Int Cl.:
***F16D 3/78*** *(2006.01)*

(21) Anmeldenummer: **12001728.0**

(22) Anmeldetag: **14.03.2012**

(54) **Wellenkupplung**

Shaft coupling

Accouplement d'arbre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2011 DE 102011014167**

(43) Veröffentlichungstag der Anmeldung:
**19.09.2012 Patentblatt 2012/38**

(73) Patentinhaber: **Deutsches Zentrum Für Luft- Und Raumfahrt E.V. (DLR)**
**51147 Köln (DE)**

(72) Erfinder:
• **Fink, Axel**
**86609 Donauwörth (DE)**
• **Hühne, Christian**
**30173 Hannover (DE)**

(74) Vertreter: **Plöger, Jan Manfred et al**
**Gramm, Lins & Partner**
**Patent- und Rechtsanwälte PartGmbB**
**Theodor-Heuss-Strasse 1**
**38122 Braunschweig (DE)**

(56) Entgegenhaltungen:
WO-A1-91/16550  DE-A1- 3 039 697
GB-A- 2 050 570  GB-A- 2 060 135

EP 2 500 595 B1

**Beschreibung**

Die Erfindung betrifft eine Wellenkupplung gemäß dem Oberbegriff von Anspruch 1.

Wellenkupplungen verbinden im Allgemein einen treibenden Teil mit einem angetriebenen Teil und gleichen einen Axialversatz und/oder einen Winkelversatz beider Teile aus. Die Größe des realisierbaren Versatzausgleichs erfordert eine angepasste Konstruktion, die einen drehfreien, sicheren, dauerfesten und komfortablen Betrieb ermöglicht. Wellenkupplungen sind unter anderem im Antriebsstrang von Fahrzeugen eingebaut. Für den Ausgleich von einem kleinen Axial- oder Winkelversatz haben sich Kupplungselemente etabliert, die fest mit der Antriebs- und Abtriebswelle verbunden sind und keine kinematischen Freiheiten haben, wie beispielsweise bei einer Kardanwelle. Derartige Wellenkupplungen ermöglichen den Ausgleich durch Nachgiebigkeiten. Diese Funktionsweise ruft in der Antriebswelle, der Abtriebswelle und der Verbindungsvorrichtung Sekundärkräfte und mit diesen einhergehende Bauteilbeanspruchungen hervor, die die Größe des ausgleichbaren Versatzes limitieren.

Aus der EP 0 064 151 A1 ist bekannt, einen Faserverbundwerkstoff zu verwenden, um dessen geringen Formwiderstand gegenüber Biegung und die relativ geringen möglichen Biegesteifigkeit dazu zu nutzen, eine elastische Ankopplung in Achsrichtung bei einer hohen Radial- und Torsionssteifigkeit zu erreichen. Dies wird durch den Einsatz eines hutförmigen Faserverbundelements realisiert, dessen zylindrischer Ansatz koaxial zur Antriebswelle realisiert und dessen Flansch im Außenbereich zur Abtriebswelle verschraubt ist. Nachteilig hieran ist eine recht aufwändige Herstellungsweise, die eine Vielzahl an unterschiedlichen Arbeitsschritten erfordert.

Aus der US 5,286,231 und der DE 22 57 903 sind Gelenkscheiben auf Basis von Elastomerwerkstoffen bekannt, wobei Scheiben in Hexaederform mit sechs Verbindungspunkten verwendet werden, bei denen jeder Verbindungspunkt alternierend mit der Antriebs- bzw. der Abtriebswelle verschraubt ist. Die Verbindung zur Antriebswelle einerseits und zur Abtriebswelle andererseits erfolgt mittels zweier versetzt angeordneter Dreibeine. Ungünstig ist hierbei die geringe Torsionssteifigkeit, die zur sicheren Übertragung hoher Drehmomente wichtig ist.

Aus der DE 10 2004 029 989 A1 ist bekannt, versteifende Fasern in das Elastomer einzubetten, um eine höhere Torsionssteifigkeit zu erzielen.

Aus der DE 197 12 302 C2 ist ein flexibles, scheibenförmiges Wellenkupplungselement bekannt, welches aus sechs radial vorstehenden, über den Umfang gleich verteilten Nasen besteht, die jeweils abwechselnd mit der Antriebswelle und der Abtriebswelle verbunden sind. Nachteilig an der dort beschriebenen Ausführungsform ist, dass in der Scheibenebene keine definierte Lastübertragung und daher beträchtliche Lastumlagerungen stattfinden, was der Lebenserwartung abträglich ist. Zudem bedingt der quasi isotrope Aufbau der Scheibe eine große Biegesteifigkeit, die zu hohen Verstellkräften und einer geringen realisierbaren Ausgleichsbewegung führt.

Aus der DE 31 08 007 C2 ist ein Wellenkupplungselement mit einer sechseckigen Polygonalausführung bekannt. Dieses ist durch eine polygonzugförmige Konzeption mit geraden Verbindungsstegen zwischen den Befestigungsbolzen der treibenden und der angetriebenen Welle charakterisiert, so dass die Drehmomentkräfte zwischen den Befestigungsaugen direkt, ohne Lastumlagerungen weitergeleitet werden. Die Stege sind lamellar ausgeführt und weisen Freiräume zwischen den einzelnen Steglamellen auf zwecks Abminderung der Biegesteifigkeit und einhergehender Verbesserung des Ausgleichsverhaltens.

Ein weiteres Konzept auf Basis der sechseckigen Polygonform mit geraden Stegelementen ist in DE 37 25 957 C1 und DE 40 33 596 C1 beschrieben. Diese Ausführung ist durch den Einsatz dünner Stegbereiche und verstärkter Befestigungsbereiche charakterisiert. Der Aufbau der Scheibe erfolgt durch alternierende Laminierung von Schichtabschnitten in den Stegbereichen; durch Überlappung der Schichtabschnitten in den Verbindungsbereichen wird die lokale Aufdickung zur Aufnahme der Bolzen generiert. Die Laminatkonfiguration ist durch den Einsatz von 0°-Lagen - orientiert in Steglängsrichtung und platziert in Laminatmitte - und ±45°-Schichten gekennzeichnet. Das Konzept zeigt eine recht hohe Komplexität auf, die hohe zeitliche Anforderungen an den Fertigungsprozess setzen und einen Einsatz für hohe Produktionsraten nicht möglich macht.

Bekannte, scheibenartig ausgebildete Gelenkelemente aus Faserverbundwerkstoff in Form eines gleichmäßigen, geradzahligen Polygons weisen somit eine viel zu große Komplexität im Aufbau auf, die den Anforderungen der Serienproduktion mit hohen Fertigungsraten nicht gerecht werden können.

Aktuelle Gelenkscheiben aus Faserverbundwerkstoff in Polygonalausführung weisen geschlossene polygonale Ringkonturen auf, bei denen an jedem Eckpunkt eine Verbindung zu den Wellen (wechselweise Antriebswelle und Abtriebswelle) vorgesehen ist. Bei der Drehmomentübertragung ist an jedem Verbindungspunkt somit ein Schenkel der Scheibe auf Zug der anderen auf Druck belastet. Angesichts der dünnen Ausführung der Schenkel ist eine Übertragung von Druckkräften nicht effektiv, so dass das Drehmoment hauptsächlich von dem zugbelasteten Schenkel übertragen wird. Der druckbelastete Schenkel trägt also effektiv nicht mit, erhöht jedoch die Biege- und Drillsteifigkeit des Scheibenelementes, was die Ausgleichfähigkeit des Elementes herabsetzt.

Aus der DE 30 39 697 A1 ist eine Verbindungseinrichtung für KühlventilatorEinheiten bekannt, bei der an einem äußeren Ring ein kurzer Steg ausgebildet ist, an dem eine radial sich erstreckende Lasche ausgebildet ist. Nachteilig an einer derartigen Wellenkupplung ist, dass sie für die Übertragung von großen Leistungen über große Winkel- und/oder Axialversatze einen geringen Wirkungsgrad aufweist.

Aus der DE 1 800 613 ist eine Wellenkupplung bekannt, die ein Übertragungselement mit zwei Stegen besitzt, wobei an jedem Steg zwei Laschen in entgegengesetzte Richtungen ausgebildet sind. Eine derartige Wellenkupplung besitzt in der Regel nur eine geringe Drehstreifigkeit, so dass große Drehmomente nur schlecht übertragen werden können.

Aus der DE 25 00 832 C2 ist eine elastische Wellenkupplung bekannt, bei der ein Innenkörper über eine gradlinig verlaufene, im Wesentlichen in Umfangsrichtung angeordnete Verbindungsvorrichtung mit einer äußeren Lasche verbunden ist. Mit einer derartigen Wellenkupplung lassen sich bei großen Winkel- und/oder Axialversatz nur schlecht große Leistungen mit hohem Wirkungsgrad übertragen.

Aus der DE 195 43187 A1 ist eine Kupplung zum winkeltreuen Kuppeln bekannt, die ein Übertragungselement besitzt, von dem vier Kurzstege in eine Lasche auslaufen. Auch bei dieser Wellenkupplung können große Leistungen bei hohem Wirkungsgrad nicht bei großen Axial- oder Winkelversatzen übertragen werden.

Aus der WO 91/16550 sind eine Vielzahl an Wellenkupplungen bekannt, die unterschiedlich geformte Übertragungselemente besitzen und in Paketen zusammengefasst sein können. Diese Pakete können über Verbindungselemente miteinander verbunden werden, so dass auch große Winkel- oder Axialversatze überbrückt werden können. Die Druckschrift beschreibt keine Verbindungsvorrichtung aus mehreren, identischen, aneinandergereihten und in identische Anordnung miteinander verbundenen Übertragungselementen.

Aus der GB 2 060 135 A ist eine Wellenkupplung bekannt, bei der mehrere Übertragungselemente hintereinander geschaltet sind. Die Wellenkupplung besitzt keine radial ausgerichteten Stege und keine zwischen Lasche und Steg ausgebildeten Verbindungspunkte. Das führt zu einer vergleichsweise geringen Torsionsfestigkeit.

Aus der GB 2 050 570 A ist eine Wellenkupplung bekannt, bei der zwei radial ausgerichtete Stege vorhanden sind, an deren Enden sich die Verbindungspunkte befinden. Aufgrund des entstehenden Kraftflusses ist auch bei dieser Wellenkupplung die Torsionssteifigkeit relativ gering ausgebildet.

Der Erfindung liegt die Aufgabe zugrunde, eine Wellenkupplung anzugeben mit einem elastischen Kupplungselement, insbesondere aus Faserverbundwerkstoff, die beanspruchungsgerecht einen großen Axial- und/oder Winkelversatz zwischen der Abtriebswelle und der Antriebswelle zulässt bei gleichzeitig hoher Torsionssteifigkeit, und durch eine einfache und kostengünstige Bauweise charakterisiert ist.

Die Erfindung löst das Problem durch eine Wellenkupplung nach Anspruch 1.

Die Erfindung bezieht sich insbesondere auf ein scheibenförmiges Kupplungselement aus Faserverbundwerkstoff (glasfaserverstärkter Kunststoff GFK, aramidfaserverstärkter Kunststoff AFK oder kohlenstofffaserverstärkter Kunststoff CFK) oder aber auch aus Metall oder aus einem geschichteten Mischverbund aus Faserverbundwerkstoff und Metall, welches mindestens zwei jedoch vorzugsweise vier gleichmäßig verteilte, zugbelastete, längliche Laschen, deren Längsachsen tangential zum Rotationskreis desselbigen Kupplungselementes ausgerichtet sind, sowie mindestens zwei, jedoch vorzugsweise vier, radial angeordnete Stege aufweist, wobei das eine Ende jeder Lasche mit einem Steg fest verbunden und das andere Ende frei ist, und an jedem Übergang der Lasche zum Steg sowie an jedem freien Ende der Lasche ein Verbindungspunkt zur Abtriebswelle bzw. Antriebswelle vorgesehen ist. Zwischen den beiden jeweiligen Verbindungspunkten kann sich jede Lasche frei verbiegen und verdrehen und somit den Axial- und Winkelversatz der Wellen bei der Rotation ausgleichen. Durch diese Anordnung kann eine höhere elastische Nachgiebigkeit in kleinerem Bauraum realisiert werden. Erfindungsgemäß ist zudem ein Kraftfahrzeug, insbesondere ein Landfahrzeug, mit einem erfindungsgemäßen Wellengelenk.

Vorteilhaft an der Erfindung ist, dass die Wellenkupplung eine hohe Torsionssteifigkeit in der Rotationsebene aufweist bei gleichzeitiger Nachgiebigkeit aus der Rotationsebene hinaus.

Es ist ein weiterer Vorteil, dass das Übertragungselement, wenn aus einem Faserverbundwerkstoff aufgebaut, nur wenig Ermüdung erfährt. Zudem zeigt das Übertragungselement aus diesem Grund eine geringere innere Reibung, so dass die Wellenkupplung einen hohen Wirkungsgrad besitzt.

Es ist ein weiterer Vorteil, dass das Übertragungselement, wenn aus Metall oder Faserverbundwerkstoff aufgebaut, eine einfache scheibenförmige Bauweise aufweist, die kostengünstige Fertigungstechniken mit hohen Fertigungsraten, wie zum Beispiel die Presstechnik für Faserverbundwerkstoffe oder Gesenkschmiedetechnik für Metall, ermöglicht.

Gemäß der Erfindung weist jede Lasche einen ersten Verbindungspunkt, der an einem distalen Ende der Lasche angeordnet ist, und einen zweiten Verbindungspunkt, der an einem Übergang zwischen Lasche und Steg angeordnet ist, auf, wobei der erste Verbindungspunkt und der zweite Verbindungspunkt den gleichen Abstand zu einer Drehachse des Übertragungselement haben. Die Drehachse des Übertragungselements fällt mit der Drehachse der Abtriebswelle und der Antriebswelle zusammen, wenn Abtriebswelle und Antriebswelle koaxial verlaufen. Durch diese Ausgestaltung wird die Lasche in Ihrer Ebene ausschließlich auf Zug belastet. Insbesondere wird die Lasche nicht auf Biegung beansprucht, was zu einem hohen übertragbaren Drehmoment und zu einer hohen Lebensdauer bei kleinem Bauraum führt. Zudem kann das Übertragungselement dann aus Verbundwerkstoff aufgebaut werden.

Besonders günstig ist es, wenn die Laschen entlang einer Strecke zwischen dem ersten Verbindungspunkt und dem zweiten Verbindungspunkt eine lokale Laschenbreite haben, wobei die lokale Laschenbreite über zumindest 90% dieser Strecke um höchstens 15% von einem über die Strecke ermittelten Mittelwert der Laschenbreite abweicht. Das Übertragungselement ist in der Regel flach. Die Laschenbreite ist die Breite der Lasche bezüglich einer Ausgleichsebene durch die Flachseite des Überragungselements, die zumindest im Wesentlichen senkrecht zur Drehachse verläuft. Besonders günstig ist eine konstante Laschenbreite. Es ist möglich, nicht aber notwendig, dass auch die Laschenhöhe gleich ist.

Vorzugsweise verlaufen die Laschen zwischen dem ersten Verbindungspunkt und dem zweiten Verbindungspunkt geradlinig und symmetrisch zu ihrer Längsachse. Es ergibt sich dann eine homogene Lastverteilung innerhalb der Laschen.

Insbesondere ist es damit vorteilhaft, wenn die Laschen zwischen den Befestigungspunkten gerade ausgeführt sind und eine konstante Breite, gegebenenfalls aber eine variable Dicke, haben, wobei sich die Verbindungslinie zwischen den beiden Befestigungspunkten auf der Mittenlinie der Lasche befindet.

Die oben genannten Merkmale führen dazu, dass die dynamische Belastung des Übertragungselements die Verwendung von Verbundwerkstoffen erlaubt, so dass die Wellenkupplung im Antriebsstrang eines Automobils verwendbar ist.

Gemäß einer bevorzugten Ausführungsform ist vorgesehen, dass die Stege zwischen den Befestigungspunkten gerade ausgeführt sind mit konstanter Breite aber mit variabler Dicke, die Verbindungslinie der beiden Befestigungspunkte sich auf der Mittenlinie der Lasche befinden, die Stege in einem sich nach Innen erstreckenden Kernbereich zusammenlaufen und die Laschen gleiche Querschnitte aufweisen und eine Laschenbreite und eine Laschenlänge haben, wobei die Laschenlänge zumindest das Doppelte der Laschenbreite beträgt.

Gemäß einer bevorzugten Ausführungsform ist das Übertragungselement mit einem Ende jeder Lasche mit der Antriebswelle verbunden und mit jedem Übergang zwischen Lasche und Steg mit der Abtriebswelle über eine mechanische, lösbare Verbindung, wie z.B. durch Bolzen oder Schrauben, gekoppelt. Um die auftretenden Lasten an jedem Verbindungspunkt von dem Übertragungselement sicher und ermüdungsfrei aufnehmen zu können ist es zweckmäßig, eine lokale Aufdickung im Bereich jedes Verbindungspunktes vorzusehen.

Es ist günstig und zweckmäßig, die Position der Befestigungspunkte im Bereich des Überganges der Lasche zum dazugehörigen Steg leicht vor demselbigen Übergang anzuordnen, um eine Behinderung der Verformung der Lasche durch den Steg auszuschließen bzw. zu minimieren.

Gemäß einer bevorzugten Ausführungsform haben die Laschen gleiche Querschnitte und weisen erfindungsgemäß eine Laschenbreite und eine Laschenlänge auf, wobei die Laschenlänge zumindest das Doppelte der Laschenbreite beträgt. Die Laschenlänge bezeichnet dabei den Abstand zwischen dem Befestigungspunkt am Ende der Lasche und dem Befestigungspunkt am Übergang zwischen Lasche und Steg. Durch diese Gestaltung der Laschen ist eine hinreichend geringe Biegesteifigkeit gewährleistet, so dass relativ geringe Verstellkräfte zwischen der Antriebswelle und der Abtriebswelle und somit geringere Lagerkräfte entstehen.

Gemäß einer bevorzugten Ausführungsform besitzt die Verbindungsvorrichtung zumindest zwei einzelne und identische Übertragungselemente, die aneinander in identischer Ausrichtung angeordnet und miteinander seriell verbunden sind. Auf diese Weise können die Biege- und Verdrillnachgiebigkeit der einzelnen Laschen und damit die Nachgiebigkeit der Verbindungsvorrichtung aus der Ebene hinaus bei hoher Belastbarkeit und Steifigkeit in der Ebene vergrößert werden, so dass größere Axialversatze und/oder Winkelversatze realisierbar sind.

Eine weitere Ausführungsform der Verbindungsvorrichtung sieht die Kombination zweier identischer Übertragungselemente vor, die aneinander jedoch versetzt und gespiegelt zueinander geschaltet sind, und zwar derart, dass die Verbindungspunkte der freien Laschenenden beider Übertragungselementen miteinander und mit einem zusätzlichen Element mit radialer Ausrichtung gekoppelt sind, die restlichen Verbindungspunkte im Übergang zwischen Steg und Lasche des einen Übertragungselementes mit der Antriebswelle, die restlichen Befestigungspunkte im Übergang zwischen Steg und Lasche des anderen Übertragungselementes (18) mit der Abtriebswelle gekoppelt sind. Auf diese Weise lässt sich die Nachgiebigkeit der Verbindungsvorrichtung aus der Rotationsebene hinaus noch weiter erhöhen, so dass größere Axialversatze und/oder Winkelversatze realisierbar sind.

Im Folgenden wird die Erfindung anhand der beigefügten Zeichnungen näher erläutert. Dabei zeigt

Figur 1      eine Explosionszeichnung einer erfindungsgemäßen Wellenkupplung,

Figur 2      die Wellenkupplung gemäß Figur 1 im zusammengebauten Zustand,

Figur 3      eine Frontansicht mit den an zwei Verbindungselementen angreifenden Kräften,

Figur 4      eine Explosionszeichnung an einer zweiten Ausführungsform einer erfindungsgemäßen Wellenkupplung,

Figur 5      die Wellenkupplung gemäß Figur 4 in einer dreidimensionalen Ansicht im zusammengebauten Zustand,

Figur 6 eine Explosionszeichnung einer weiteren Ausführungsform einer erfindungsgemäßen Wellenkupplung, und

Figur 7 die Wellenkupplung gemäß Figur 6 in einer dreidimensionalen Ansicht im zusammengebauten Zustand,

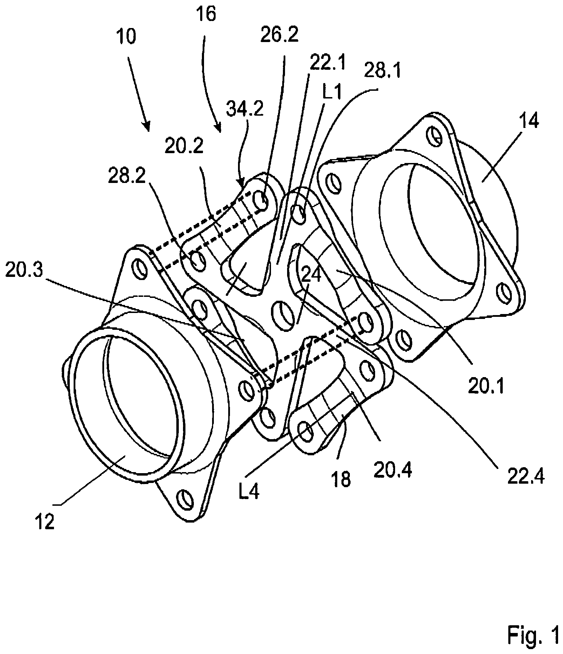

Figur 1 zeigt eine erfindungsgemäße Wellenkupplung 10 mit einer Antriebswelle 12 (nur der Endbeschlag skizziert), einer Abtriebswelle 14 (nur der Endbeschlag skizziert) und einer Verbindungsvorrichtung 16, die die Antriebswelle 12 mit der Abtriebswelle 14 drehfest verbindet und ein Übertragungselement 18 aufweist.

Das Übertragungselement 18 besitzt vier gleichmäßig verteilte Laschen 20.1, 20.2, 20.3, 20.4, die tangential zum Rotationskreis des Übertragungselementes ausgerichtet sind, und vier radial angeordnete Stege 22.1, 22.2, 22.3, 22.4, an deren einem Ende jeweils eine Lasche befestigt ist. Die Stege 22 (Bezugszeichen ohne Zählsuffix bezeichnen das Objekt als solches) laufen in einem Kernbereich 24 zusammen, der, wie Figur 1 zeigt, eine Bohrung aufweisen kann.

Die Laschen 20 erstrecken sich in Umfangsrichtung und weisen jeweils einen ersten Verbindungspunkt 26 und einen zweiten Verbindungspunkt 28 auf. So besitzt die zweite Lasche 20.2 einen ersten Verbindungspunkt 26.2 und einen zweiten Verbindungspunkt 28.2. Für die übrigen Laschen sind die Verbindungspunkte zur besseren Übersichtlichkeit nicht eingezeichnet.

Der erste Verbindungspunkt 26 ist an einem distalen Ende der jeweiligen Lasche angeordnet und mit der Antriebswelle 12 mittels eines ersten Verbindungselements 30 verbunden.

Der zweite Verbindungspunkt 28 ist an einem Übergang zwischen Lasche 20 und Steg 22 ausgebildet. Im zweiten Verbindungspunkt 28 befestigt ein zweites Verbindungselement 32 das Übertragungselement 18 mit der Abtriebswelle 14. Die ersten Verbindungselemente 30 und die zweiten Verbindungselemente 32 sind beispielsweise durch Bolzen oder Schrauben gebildet.

Die Stege 22 haben keine tragende Funktion und halten lediglich die Laschen 20 im Verbund zusammen. Die Geometrie der Stege 22 und der Übergang zur Lasche 20 ist so gewählt, dass die Stege 22 die Verformung der Laschen 20 nicht behindern und keine örtlichen Spannungsüberhöhungen im Übergang in die Lasche 20 auftreten. Die Laschen 20 weisen eine Aufdickung 34 im Bereich beider Verbindungspunkte 28 und 26 auf. In Figur 1 ist die Aufdickung 34.2 im Verbindungspunkt 26.2 und im Verbindungspunkt 28.2 der Lasche 20.2 eingezeichnet. Die Dicke des Steges 22.2 übernimmt hier der Einfachheit halber die Dicke der Aufdickung 34.2 im Verbindungspunkt 28.2, kann aber eine davon abweichende Dicke aufweisen. Die übrigen Aufdickungen sind der Übersichtlichkeit halber nicht eingezeichnet. Beispielsweise beträgt die Dicke des Übertragungselementes 18 im Bereich der Aufdickung 34 das 1,5-fache der Dicke außerhalb der Aufdickung, wobei die Aufdickung auch stärker ausgebildet sein kann, so dass die Dicke in dem Bereich größer ist als das 1,5-fache der Dicke in den übrigen Bereichen.

Zwischen dem ersten Verbindungspunkt 26 und dem zweiten Verbindungspunkt 28 erstreckt sich ein Mittelbereich, der eine geringere Wandstärke hat, um höhere Biege- und Drillnachgiebigkeiten zu realisieren, die für eine hohe Ausgleichsfähigkeit der Wellenkupplung 10 vorteilhaft sind. Das Übertragungselement 18 ist vorzugsweise in Faserverbundbauweise aufgebaut, bei der das elastische Verhalten durch einen geeigneten Laminataufbau optimiert werden kann. Vorzugsweise sind die Lagen mit einer Faserorientierung entlang der Laschenlängsachse in der Mittenebene platziert.

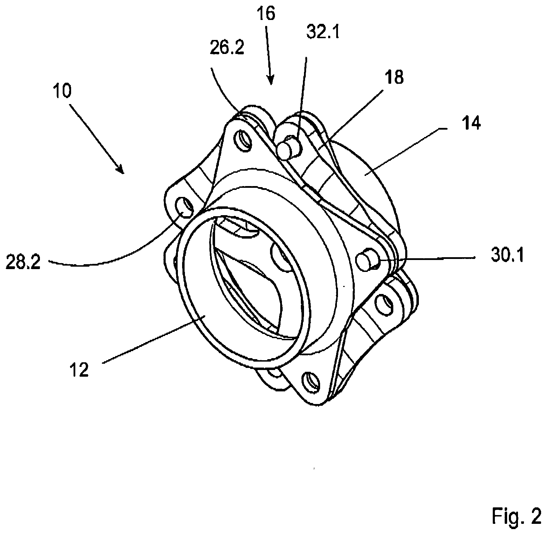

Figur 2 zeigt die Wellenkupplung 10 gemäß Figur 1 im zusammengebauten Zustand.

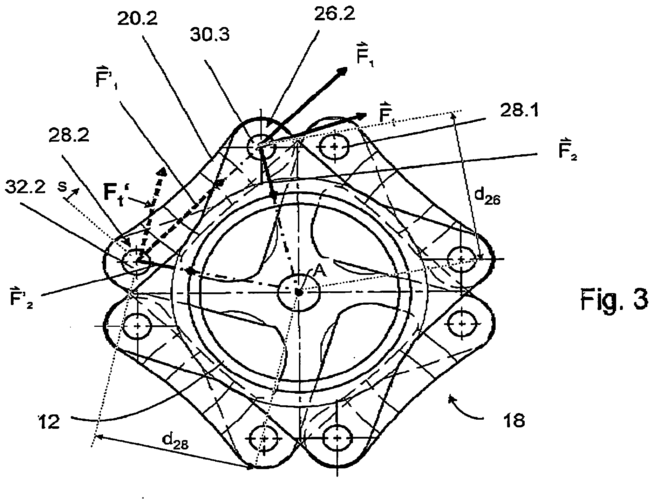

Figur 3 zeigt eine Frontansicht der Wellenkupplung 10 mit am antriebswellenseitigen ersten Verbindungspunkt 26 (nämlich 26.2) angreifenden Kräften. Ein auf die Antriebswelle 12 aufgebrachtes Drehmoment M ruft am ersten Befestigungspunkt 26.2 eine tangentiale Kraft $\vec{F}_1$ hervor. Die verbundene Lasche 20.2 des Übertragungselements 18 überträgt eine erste Komponente $\vec{F}_{1_1}$ während die komplementäre zweite Komponente $\vec{F}_2$ von dem Beschlag der Antriebswelle 12 aufgenommen wird.

Die erste Komponente $\vec{F}_1$ ruft am zweiten Verbindungspunkt 28.2 eine gleichgroße Kraft $\vec{F}_1'$ hervor. Deren zum Rotationskreis tangentiale Komponente $\vec{F}_1'$ die gleich groß ist wie die am ersten Verbindungspunkt 26.2 angreifende tangentiale Komponente $\vec{F}_{1_1}$ treibt die Abtriebswelle 14 an (vgl. Figur 1). Die zweite Komponente $\vec{F}_2'$ wird vom Beschlag der Abtriebswelle aufgenommen.

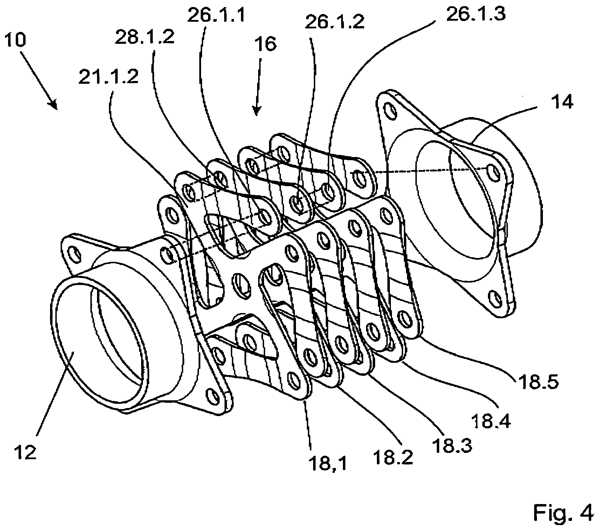

Figur 4 zeigt eine zweite Ausführungsform einer erfindungsgemäßen Wellenkupplung 10, bei der die Verbindungsvorrichtung 16 eine Mehrzahl an identischen Übertragungselementen 18.1, 18.2, ..., 18.5 aufweist, die aneinandergereiht in identischer Ausrichtung miteinander verbunden sind. Es ist angedeutet, dass alle Verbindungspunkte 26.1.1, 26.1.2, ... an jedem freien Ende der Laschen 20.1.1, 20.1.2, ... der Übertragungselemente 18.1, 18.2, ... miteinander und mit der Antriebswelle 12 mittels der Verbindungselemente 32.1, 32.2, ... verbunden sind. Es ist auch angedeutet, dass alle Verbindungspunkte 28.1.1, 28.1.2, ... an jedem Übergangsbereich der Laschen 20.1.1, 20.1,2, ... zu den jeweiligen Stegen 22.1.1, 22.1.2, ... der Übertragungselemente 18.1, 18.2, ... miteinander und mit der Abtriebswelle 14 mittels der Verbindungselemente 30.1, 30.2,... verbunden sind.

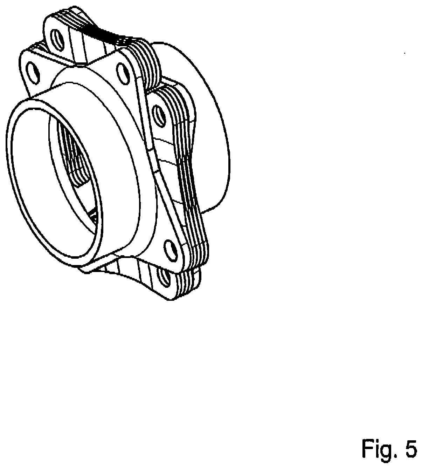

Figur 5 zeigt die Wellenkupplung 10 gemäß Figur 4 im zusammengebauten Zustand.

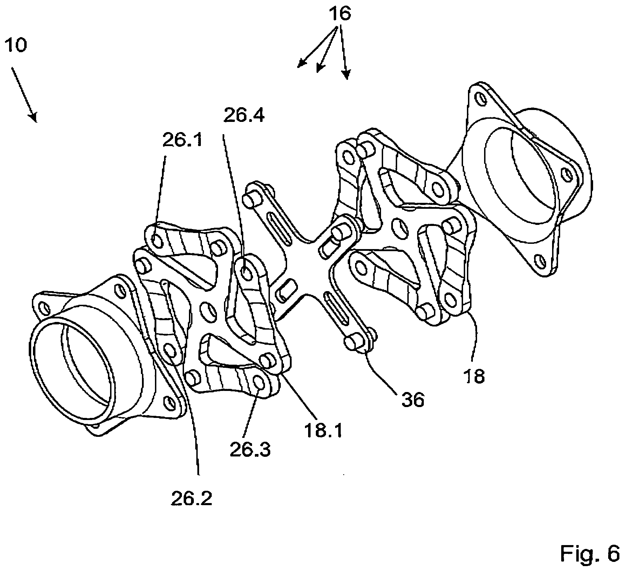

Figur 6 zeigt eine weitere erfindungsgemäße Wellenkupplung 10, bei der die Verbindungsvorrichtung 16 aus zwei identischen Übertragungselementen 18.1 und 18.2 und einem Zwischenelement 36 besteht, welches zwischen beiden Übertragungselementen angeordnet sind. Das Übertragungselement 18.2 ist relativ zum Übertragungselement 18.1 gespiegelt und verdreht angeordnet. Die Verbindungspunkte 26.1.1, 26.2.2, ... des Übertragungselementes 18.1 sind mit den dazugehörigen Verbindungspunkten 26.1.2, 26.2.2, ... des Übertragungselementes 18.1 sowie mit dem Zwischenelement 36 über die Verbindungselemente 32.1, 32.2, ... gekoppelt. Die Verbindungspunkte 28.1.1, 28.2.1, ... des Übertragungselementes 18.1 sind über die Verbindungselemente 30.1 mit der Antriebswelle 12 (nur der Beschlag ist skizziert) gekoppelt. Die Verbindungspunkte 28.1.2, 28.2.2, ... des Übertragungs-elementes 18.2 sind über die Verbindungselemente 30.2 mit der Abtriebswelle 14 (nur der Beschlag ist skizziert) gekoppelt. Das Zwischenelement 36 ist hier notwendig, um die verbleibende Lastkomponente an jedem gemeinsamen Kopplungspunkt der Übertragungselemente 18.1 und 18.2 aufnehmen zu können und damit zusätzliche Biegebelastung in den Laschen zu vermeiden.

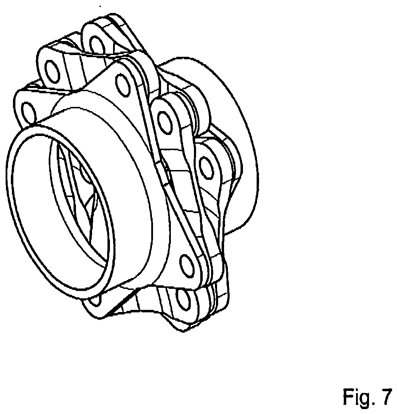

Figur 7 zeigt die Wellenkupplung nach 6 im zusammengebauten Zustand.

Figur 3 zeigt zudem, dass für jede Lasche 20 ein Abstand $d_{26}$ des ersten Verbindungspunkts 26 zu einer Drehachse A des Übertragungselements 18 einem Abstand $d_{28}$ des zweiten Verbindungspunkts 28 entspricht. Die Laschen 20 haben entlang einer Strecke s zwischen dem ersten Verbindungspunkt 26 und dem zweiten Verbindungspunkt 28 eine lokale Laschenbreite B(s), wobei die lokale Laschenbreite B(s) über zumindest 90% dieser Strecke um höchstens 15% von einem über die Strecke ermittelten Mittelwert der Laschenbreite B abweicht.

Die Laschen 20 verlaufen zwischen dem ersten Verbindungspunkt 26 und dem zweiten Verbindungspunkt 28 geradlinig und symmetrisch zur Längsachse L der jeweiligen Lasche 20. In anderen Worten sind die Laschen zwischen den Verbindungspunkten 26, 28 spiegelsymmetrisch zu deren Längsachse L.

**Bezugszeichenliste**

| | |
|---|---|
| 10 | Wellenkupplung |
| 12 | Antriebswelle |
| 14 | Abtriebswelle |
| 16 | Verbindungsvorrichtung |
| 18 | Übertragungselement |
| 20 | Lasche |
| 22 | Steg |
| 24 | Kernbereich |
| 26 | erster Verbindungspunkt |
| 28 | zweiter Verbindungspunkt |
| 30 | erstes Verbindungselement |
| 32 | zweites Verbindungselement |
| 34 | Aufdickung |
| 36 | Zwischenelement |
| M | Drehmoment |
| $\overline{F}_1$ | tangentiale Kraft |
| $\overline{F}_1$ | erste Komponente |
| $\overline{F}_2$ | zweite Komponente |
| A | Drehachse |
| B | Laschenbreite |
| d | Abstand Verbindungspunkt - Drehachse |
| s | Strecke |
| L | Längsachse |

**Patentansprüche**

1. Wellenkupplung mit:

(a) einer Antriebswelle (12),
(b) einer Abtriebswelle (14) und
(c) einer Verbindungsvorrichtung (16), die die Antriebswelle (12) mit der Abtriebswelle (14) drehfest verbindet und zumindest ein Übertragungselement (18) aufweist, das aus einem Verbundwerkstoff, insbesondere einem Faserverbundwerkstoff, oder Metall aufgebaut ist,
(e) wobei das Übertragungselement (18)

(i) zumindest zwei Laschen (20), die tangential zum Rotationskreis ausgerichtet sind, und
(ii) wobei jede Lasche (20) an einem Laschenende mit einem Steg (22) fest verbunden ist,
(iii) jede Lasche (20) beim Drehen der Antriebswelle und der Abtriebswelle und bei gleichzeitigem Auftreten eines Axialund/oder Winkelversatzes zyklisch gebogen und verdreht wird und
(iv) die Stege (22) so angeordnet sind, dass sie die Verformung der Laschen (20) nicht behindern,

**dadurch gekennzeichnet, dass** jede Lasche (20)

(i) einen ersten Verbindungspunkt (26), der an einem distalen Ende der Lasche angeordnet ist, und
(ii) einen zweiten Verbindungspunkt (26), der an einem Übergang zwischen Lasche

(20) und Steg (22) angeordnet ist, aufweist, (iii) wobei der erste Verbindungspunkt (26) und der zweite Verbindungspunkt (28) den gleichen Abstand (d26 , d28) zu einer Drehachse (A) des Übertragungselements (18) haben,

(f) die Stege (22) von einem Kernbereich (24) nach radial außen ausgerichtet sind, (g) wobei die Stege (22) gleiche Querschnitte aufweisen und eine Stegbreite und eine Steglänge haben, wobei die Steglänge zumindest das Doppelte der Stegbreite beträgt.

2. Wellenkupplung nach Anspruch 1, **dadurch gekennzeichnet, dass** die Stege zwischen den Befestigungspunkten gerade ausgeführt sind mit konstanter Breite aber mit variabler Dicke, die Verbindungslinie der beiden Befestigungspunkte sich auf der Mittenlinie der Lasche befindet, die Stege in einem sich nach Innen erstreckenden Kernbereich zusammenlaufen und die Laschen gleiche Querschnitte aufweisen und eine Laschenbreite und eine Laschenlänge haben, wobei die Laschenlänge zumindest das Doppelte der Laschenbreite beträgt.

3. Wellenkupplung nach einem der vorstehenden Ansprüche, **dadurch gekennzeichnet, dass** das Übertragungselement (18)

   - mit dem freien Ende jeder Lasche (20) mit der Antriebswelle (12) und
   - an jedem Übergang zwischen Lasche (20) und Steg (22) mit der Abtriebswelle (14) mechanisch und lösbar verbunden ist.

4. Wellenkupplung nach einem der vorstehenden Ansprüche, **dadurch gekennzeichnet, dass**

   - die Laschen (20) entlang einer Strecke zwischen dem ersten Verbindungspunkt (26) und dem zweiten Verbindungspunkt (28) eine lokale Laschenbreite (B(s)) haben,
   - wobei die lokale Laschenbreite (B(s)) über zumindest 90% dieser Strecke um höchstens 15% von einem über die Strecke ermittelten Mittelwert der Laschenbreite (B) abweicht.

5. Wellenkupplung nach einem der vorstehenden Ansprüche, **dadurch gekennzeichnet, dass** die Laschen (20) zwischen dem ersten Verbindungspunkt (26) und dem zweiten Verbindungspunkt (28) symmetrisch zu ihrer Längsachse verlaufen.

6. Wellenkupplung nach einem der vorstehenden Ansprüche, **dadurch gekennzeichnet, dass**

   - die Laschen (20) gleiche Querschnitte aufweisen und
   - eine Laschenbreite und eine Laschenlänge haben,
   - wobei die Laschenlänge zumindest das Doppelte der Laschenbreite beträgt.

7. Wellenkupplung nach einem der vorstehenden Ansprüche, **dadurch gekennzeichnet, dass** das Übertragungselement (18) aus einem Stück besteht und somit jede Lasche (20) mit dem entsprechenden Steg (22) fügestellenfrei verbunden ist.

8. Wellenkupplung nach einem der vorstehenden Ansprüche, **dadurch gekennzeichnet, dass** das Übertragungselement (18) an jeder Verbindungsstelle zu der Antriebs- und Abtriebswelle eine Aufdickung (34) aufweist.

9. Wellenkupplung nach einem der vorstehenden Ansprüche, **dadurch gekennzeichnet, dass** die Verbindungsvorrichtung (16) aus mehreren, identischen, aneinandergereihten und in identischer Anordnung miteinander verbundenen Übertragungselementen (18) aufgebaut ist.

10. Wellenkupplung nach einem der vorstehenden Ansprüche, **dadurch gekennzeichnet, dass** zwei identische Übertragungselemente (18) aneinander, jedoch versetzt und gespiegelt zueinander geschaltet sind, und zwar derart, dass die Verbindungspunkte der freien Laschenenden beider Übertragungselemente (18) miteinander und mit einem zusätzlichen Element mit radialer Ausrichtung gekoppelt sind, die restlichen Verbindungspunkte des einen Übertragungselementes (18) mit der Antriebswelle, die restlichen Befestigungspunkte des anderen Übertragungselementes (18) mit der Abtriebswelle gekoppelt sind.

11. Wellenkupplung nach einem der vorstehenden Ansprüche, **dadurch gekennzeichnet, dass** das das Übertragungselement (18) aus einem geschichteten Verbundwerkstoff besteht, welches aus einer beliebigen Kombination von Schichten aus Faserverbundwerkstoff, Metall und Elastomer in beliebiger Stapelfolge aufgebaut ist, wobei vorzugsweise die biegesteifen Schichten in der Mittenebene des Übertragungselements angeordnet sind.

12. Fahrzeug, insbesondere Landfahrzeug, mit einer Wellenkupplung (10) nach einem der vorstehenden Ansprüche, wobei die Wellenkupplung insbesondere in einem Antriebsstrang von einem Motor des Landfahrzeugs zu Rädern angeordnet ist.

## Claims

1. A shaft coupling with:

   (a) a drive shaft (12),
   (b) an output shaft (14) and
   (c) a connecting device (16) that

      connects the drive shaft (12) to that output shaft (14) such that it is torque-proof and comprises at least one transmission element (18)

         that is made of a composite material, in particular a fibre composite, or metal,

   (d) the transmission element (18) comprising

      (i) at least two tongues (20) that are arranged at a tangent to the circle of rotation and
      (ii) each tongue (20) being firmly attached to a bar (22) at a tongue end;
      (iii) each tongue (20) being periodically bent and twisted upon rotation of the drive shaft and the output shaft and upon the simultaneous occurrence of an axial and/or angular offset;
      (iv) and the bars (22) being arranged such that they do not impede the deformation of the tongues (20),

   **characterised by** the fact that
   (e) each tongue (20) comprises

      (i) a first connection point (26) that is arranged at a distal end of the tongue, and
      (ii) a second connection point (26) that is arranged at a transfer point between a tongue (20) and bar (22),
      (iii) the first connection point (26) and the second connection point (28) being situated the same distance ($d_{26}$, $d_{28}$) from a rotational axis (A) of the transmission element (18);

   (f) the bars (22) are positioned radially outwards from a central area (24),
   (g) the bars (22) having the same cross-section and a bar width and bar length, wherein the bar length is at least double the value of the bar width.

2. The shaft coupling according to claim 1, **characterised by** the fact that the bars between the fixing points are constructed to be straight with a constant width, but of variable thickness; the line connecting the two fixing points is located on the central line of the tongues; the bars converge in a central area that extends inwards; and the tongues comprise equal cross-sections and a tongue width and tongue length, wherein the tongue length is at least double the value of the tongue width.

3. The shaft coupling according to one of the above claims, **characterised by** the fact that the transmission element (18)

   - is connected to the drive shaft (12) via the free end of each tongue (20) and
   - to the output shaft (14) at each transfer point between tongue (20) and bar (22), the connections being mechanical and detachable.

4. The shaft coupling according to one of the above claims, **characterised by** the fact that

   - the tongues (20) have a local tongue width (B(s)) along a section between the first connection point (26) and the second connection point (28),
   - the local tongue width (B(s)) deviating from a mean value of the tongue width (B) calculated across the section by a maximum of 15% across at least 90% of this section.

5. The shaft coupling according to one of the above claims, **characterised by** the fact that the tongues (20) run symmetrically to their longitudinal axis between the first connection point (26) and the second connection point (28).

6. The shaft coupling according to one of the above claims, **characterised by** the fact that

   - the tongues (20) have the same cross-section and
   - a tongue width and a tongue length,
   - the tongue length being at least double the value of the tongue width.

7. The shaft coupling according to one of the above claims, **characterised by** the fact that the transmission element (18) is made up of a single piece, meaning that connection between each tongue (20) and the corresponding bar (22) is free of joints.

8. The shaft coupling according to one of the above claims, **characterised by** the fact that the transmission element (18) comprises a thicker section (34) at each connection point with the drive and output shaft.

9. The shaft coupling according to one of the above claims, **characterised by** the fact that the connecting device (16) is made up of several identical transmission elements (18) that are joined together in a row and in an identical arrangement.

**10.** The shaft coupling according to one of the above claims, **characterised by** the fact that two identical transmission elements (18) are operated together, but at an offset and in a mirror image to one another: this is conducted in such a way that the connection points of the free ends of the tongues of both transmission elements (18) are coupled with one another and with an additional element that is radially aligned; the remaining connection points of the one transmission element (18) are coupled with the drive shaft, and the remaining fixing points of the other transmission element (18) with the output shaft.

**11.** The shaft coupling according to one of the above claims, **characterised by** the fact that the transmission element (18) is made of a layered composite material, which comprises a preferred combination of fibre composite, metal and elastomer layers in a preferred stacking sequence, wherein the rigid layers are preferably arranged in the central plane of the transmission element.

**12.** A Vehicle, in particular a land vehicle, with a shaft coupling (10) according to one of the above claims, the shaft coupling being arranged in particular in a drive train from an engine of the land vehicle to the wheels.

**Revendications**

**1.** Accouplement d'arbre, comportant :

(a) un arbre menant (12),
(b) un arbre mené (14), et
(c) un dispositif de liaison (16) qui relie solidairement en rotation l'arbre menant (12) à l'arbre mené (14) et comprend au moins un élément de transmission (18)

qui est réalisé en un matériau composite, en particulier un matériau composite de fibres ou en métal,

(d) dans lequel l'élément de transmission (18) comprend

(i) au moins deux pattes (20) qui sont orientées tangentiellement au cercle de rotation, et
(ii) à une extrémité de patte, chaque patte (20) est fermement reliée à une barrette (22),
(iii) chaque patte (20) est recourbée cycliquement et tournée lors de la rotation de l'arbre mentant et de l'arbre mené et lorsqu'il se produit simultanément un décalage axial et/ou angulaire, et
(iv) les barrettes (22) sont agencées de manière à ne pas empêcher la déformation des pattes (20),

**caractérisé en ce que**

(e) chaque patte (20) présente

(i) un premier point de liaison (26) qui est disposé à une extrémité distale de la patte, et
(ii) un second point de liaison (28) qui est disposé à une transition entre la patte (20) et la barrette (22),
(iii) le premier point de liaison (26) et le second point de liaison (28) ayant la même distance (d26, d28) par rapport à un axe de rotation (A) de l'élément de transmission (18),

(f) les barrettes (22) sont orientées depuis une zone formant noyau (24) radialement vers l'extérieur,
(g) les barrettes (22) présentent les mêmes sections transversales et ont une largeur et une longueur, la longueur étant au moins le double de la largeur.

**2.** Accouplement d'arbre selon la revendication 1, **caractérisé en ce que** les barrettes entre les points de fixation sont réalisées droites avec une largeur constante mais avec une épaisseur variable, la ligne de liaison des deux points de fixation se trouve sur la ligne médiane de la patte, les barrettes convergent en une zone formant noyau s'étendant vers l'intérieur et les pattes présentent les mêmes sections transversales et ont une largeur et une longueur, la longueur étant au moins le double de la largeur.

**3.** Accouplement d'arbre selon l'une des revendications précédentes, **caractérisé en ce que** l'élément de transmission (18) est relié mécaniquement et de façon détachable

- à l'arbre menant (12) par l'extrémité libre de chaque patte (20) et
- à l'arbre mené (14) à chaque transition entre la patte (20) et la barrette (22).

**4.** Accouplement d'arbre selon l'une des revendications précédentes, **caractérisé en ce que**

- les pattes (20) ont une largeur locale (B(s)) le long d'un trajet entre le premier point de liaison (26) et le second point de liaison (28),
- et sur au moins 90 % de ce trajet, la largeur locale (B(s)) diffère au maximum de 15 % d'une valeur moyenne de la largeur (B) définie sur ledit trajet.

5. Accouplement d'arbre selon l'une des revendications précédentes, **caractérisé en ce que** les pattes (20) entre le premier point de liaison (26) et le second point de liaison (28) s'étendent symétriquement à leur axe longitudinal.

6. Accouplement d'arbre selon l'une des revendications précédentes, **caractérisé en ce que**

   - les pattes (20) présentent les mêmes sections transversales et
   - ont une largeur et une longueur,
   - la longueur étant au moins le double de la largeur.

7. Accouplement d'arbre selon l'une des revendications précédentes, **caractérisé en ce que** l'élément de transmission (18) est constitué d'un seul tenant et donc chaque patte (20) est reliée sans jointure à la barrette correspondante (22).

8. Accouplement d'arbre selon l'une des revendications précédentes, **caractérisé en ce que** l'élément de transmission (18) présente un épaississement (34) à chaque emplacement de liaison aux arbres menant et mené.

9. Accouplement d'arbre selon l'une des revendications précédentes, **caractérisé en ce que** le dispositif de liaison (16) est composé de plusieurs éléments de transmission (18) identiques juxtaposés et reliés les uns aux autres en disposition identique.

10. Accouplement d'arbre selon l'une des revendications précédentes, **caractérisé en ce que** deux éléments de transmission (18) identiques sont montés l'un sur l'autre, mais en décalage et de façon symétrique, de telle sorte que les points de liaison des extrémités libres des pattes des deux éléments de transmission (18) sont couplés l'un à l'autre et à un élément supplémentaire à orientation radiale, et les points de liaison restants de l'un des éléments de transmission (18) sont couplés à l'arbre menant, et les points de fixation restants de l'autre élément de transmission (18) sont couplés à l'arbre mené.

11. Accouplement d'arbre selon l'une des revendications précédentes, **caractérisé en ce que** l'élément de transmission (18) est constitué en un matériau composite stratifié qui est composé d'une combinaison quelconque de couches de matériau composite de fibres, de métal et d'élastomère en un ordre d'empilement quelconque, les couches rigides en flexion étant agencées de préférence dans le plan médian de l'élément de transmission.

12. Véhicule, en particulier véhicule terrestre, comportant un accouplement d'arbre (10) selon l'une des revendications précédentes, l'accouplement d'arbre étant agencé en particulier dans un train d'entraînement depuis un moteur du véhicule terrestre vers les roues.

Fig. 1

Fig. 2

Fig. 3

Fig. 4

EP 2 500 595 B1

Fig. 5

EP 2 500 595 B1

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0064151 A1
- US 5286231 A
- DE 2257903
- DE 102004029989 A1
- DE 19712302 C2
- DE 3108007 C2
- DE 3725957 C1
- DE 4033596 C1
- DE 3039697 A1
- DE 1800613
- DE 2500832 C2
- DE 19543187 A1
- WO 9116550 A
- GB 2060135 A
- GB 2050570 A